Europäisches Patentamt

European Patent Office

Office européen des brevets

(19)

(11) **EP 1 148 459 A2**

(12) **EUROPEAN PATENT APPLICATION**

(43) Date of publication:
24.10.2001 Bulletin 2001/43

(51) Int Cl.⁷: **G08G 1/0969**

(21) Application number: 01303179.4

(22) Date of filing: 03.04.2001

(84) Designated Contracting States:
**AT BE CH CY DE DK ES FI FR GB GR IE IT LI LU MC NL PT SE TR**
Designated Extension States:
**AL LT LV MK RO SI**

(30) Priority: **06.04.2000 JP 2000104689**

(71) Applicant: **A. P. One System Co., Ltd.**
**Tokyo (JP)**

(72) Inventor: **Tamura, Yasuhiro,**
**c/o A.P. One System Co., Ltd.**
**Tokyo (JP)**

(74) Representative: **Jackson, David Spence**
**REDDIE & GROSE**
**16, Theobalds Road**
**London, WC1X 8PL (GB)**

(54) **Positional information display system**

(57) A portable terminal device includes: a position detecting unit (1) for detecting device position on the basis of a GPS signal; an orientation detecting unit (2) for detecting device orientation by means of a flux gate type magnetic sensor (2) or another geomagnetic sensor; an arithmetically operating unit (CPU 6) for correcting the positional information detected by the position detecting unit (1) with orientation information from the orientation detecting unit (2); a map information storing unit (7) for storing map information therein; a positional information display unit (9) for displaying the present position on the basis of output from the arithmetically operating unit together with the map information; and a display process-
ing unit (8) for subjecting the map information displayed by the positional information display unit (9) to rotary scrolling through an angle on the basis of orientation information from the orientation detecting unit (2) in accordance with orientation of the device at the present position. When the orientation is changed by the movement of the portable terminal device, the map information is rotated by the display processing unit (8), and the present position of the portable terminal device is displayed on a visual display portion (91) of the positional information display unit (9) so that the forward moving direction is always a predetermined specific direction within the visual display portion (91).

Fig. 1

EP 1 148 459 A2

## Description

Background of the Invention

1. Field of the Invention

The present invention relates to a positional information display system for displaying present position on a display section of a portable terminal device, preferably a portable telephone, and especially in which map information rotates in accordance with change in orientation of the portable device as the device is moved.

2. Description of the Related Art

A navigation system, which may be mounted on a vehicle, utilises the GPS (global positioning system) and displays a present position on a terminal device. The GPS provides a difference in the arrival times of electric waves transmitted from four or more satellites to a user through a control station on the ground and provides a measure of the present position of the user. Also, direction of movement is obtained by, for example, calculating movement: in an integrating system on the basis of signals from a gyro and the GPS. The present position and the direction of movement, which have been measured by the GPS and the gyro, are displayed together with map data on a monitor of the terminal device.

In the above-described navigation system, since movement of the navigation system at a speed of about 40 km/h or higher occurs (for example if the system is in a car), there is a time difference between a start point (display point) and a measurement point. Also, since the received signals are processed by the integrating system, errors are accumulated. An attempt to correct these errors is made by utilising a signal from the gyro. However, because the signal from the gyro per se is processed by the integrating system, if there is an error in the original information per se, such error is maintained as it is or is increased and then displayed.

Also, the map data displayed by the terminal device tracks change in the present position with the travel of the vehicle merely by conducting a scroll operation in the forward and backward directions and a scroll operation in the right and left directions. For that reason, the orientation of the vehicle does not always coincide with the travel direction indicated on the displayed map data, which is disorientating for the user.

It is difficult to reduce the size of a gyroscopic orientation detecting device. Also, because of the use of the integrating system as described above, there occurs unevenness or an error in detection of the orientation. As a result, it is difficult to incorporate the conventional position display system in a portable terminal device such as a portable telephone.

Summary of the Invention

The present invention provides a system as defined in claim 1. Preferred features of embodiments of the invention are set out in the dependent claims.

An object of preferred embodiments of the present invention is to provide a positional information display system which is capable of displaying the present position of a user together with map information on a small portable terminal device, preferably a portable telephone, and displays the map information in such a manner that the map information rotates with angular movement of the portable terminal device, provides a display in which displayed forward moving direction of the portable terminal device is always a predetermined specific direction within the plane of the display, and also which is capable of correcting the positional information of a GPS receiving portion in accordance with orientation information from a geomagnetic sensor, to thereby permanently eliminate possible accumulation of error.

In order to achieve the above object, according to a preferred embodiment of the present invention, there is provided preferably a portable terminal device comprising: position detecting means for detecting a position on the basis of a GPS signal; orientation detecting means for detecting an orientation by a flux gate type magnetic sensor consisting of a sensor substrate in which a magnetic field detection coil substrate and an exciting coil substrate are laminated on the upper and lower surfaces of a sensor core, or a geomagnetic sensor using a hall element, a magnetic resistance element or the like; arithmetically operating means for correcting the positional information detected by said position detecting means by said orientation detecting means; map information storing means for storing map information therein; positional information display means for displaying the present position determined on the basis of corrected positional information from said arithmetically operating means together with the map information; and display processing means for subjecting the map information displayed by said positional information display means to rotary scrolling by the amount of angular change on the basis of an output signal from said orientation detecting means with a change of orientation of the present position. When the orientation is changed by the movement of the portable terminal device, the map information is rotated by the display processing means, and the present position of the portable terminal device is displayed on the display portion of the positional information display means so that the displayed forward moving direction is always the predetermined specific direction within the plane of the display portion.

The orientation detecting means may be a flux gate type magnetic sensor or another geomagnetic sensor. The flux gate type magnetic sensor may be in the form of a magnetic sensor disclosed by Japanese Patent Unexamined Publication No. Hei 9-43322 and Japanese Patent Application Laid-open No. Hei 11-118892.

The sensor core may be formed of a plate-shaped amorphous core. The magnetic field detection coil substrate includes a first detection coil substrate having a coil pattern for formation of an x-axial component magnetic field detection coil and a second detection coil substrate having a coil pattern for formation of a y-axial component magnetic field detection coil. The exciting coil substrate includes an annular coil pattern for formation of an exciting coil. Also, through-holes that are connected to the respective coil patterns are defined in the edge portions of the sensor substrates.

As other geomagnetic sensors which may be used, geomagnetic sensors using a hall element or a magnetic resistance element are proposed. Those geomagnetic sensors are sufficiently small to be mountable on the portable terminal device and are highly sensitive.

The magnetic sensor resolves the geomagnetic field into an x-axial direction magnetic field component and a y-axial direction magnetic field component and produces from those components an analog orientation signal. The analog orientation signal is converted into a digital signal and then arithmetically processed to calculate an angle (referred to herein as the orientation angle) between the orientation of the present position and magnetic north for which the orientation angle is 0 degree.

The display processing means then displays the map information specified by the position detecting means in such a manner that the map information is rotated through the orientation angle in such a direction that the forward moving direction of the portable terminal device is always displayed in the predetermined specific direction within the plane of the display portion, for example, towards an upper side.

The positional information display means includes not only visual display means for an image, a character and so on, but also audio output means. With this structure, the present position and/or the forward moving state are provided visual display and audio output.

When the map information displayed by the positional information display means is rotationally processed by the display processing means, a character contained in the map information maintains the positional relation before the map information is rotationally processed in the above specified direction. Also, preferably the positional information display means displays the shortest route to or the time required to reach a given destination.

Brief Description of the Drawings

These and other objects, features and advantages of this invention will become more fully apparent from the following detailed description taken with the accompanying drawings in which:

Fig. 1 is a block diagram showing the outline of a system in accordance with an embodiment of the present invention;
Fig. 2 is an exploded explanatory diagram showing an example of a magnetic sensor;
Fig. 3 is an explanatory diagram showing a magnetic vector for obtaining an angle for rotating map information;
Fig. 4 is an explanatory diagram showing map information including a present position specified by GPS;
Fig. 5 is an explanatory diagram showing map information which is sectioned and selected by a map information display processing portion from the map information shown in Fig. 4 on the basis of an orientation angle; and
Fig. 6 is an explanatory diagram showing the selected map information in a state where the selected map shown in Fig. 5 is rotated on the basis of the orientation angle.

Detailed Description of the Preferred Embodiments

A description will now be given in more detail of a preferred embodiment of the present invention with reference to the accompanying drawings.

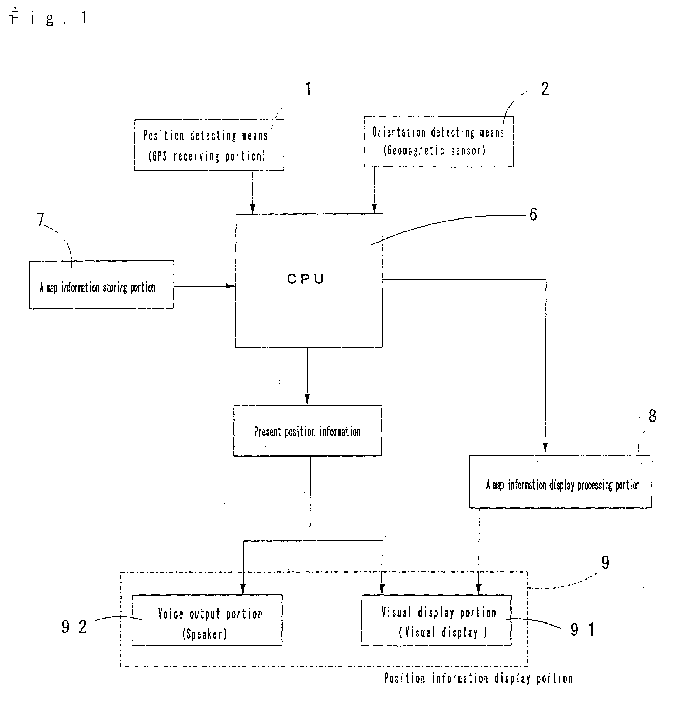

Fig. 1 is a block diagram showing a system in accordance with an embodiment of the present invention, which is incorporated in a portable telephone (not shown). In the figure, a GPS receiving portion functions as a position detecting means which calculates the present longitude and latitude from electric waves from a GPS satellite which are received by an antenna (not shown).

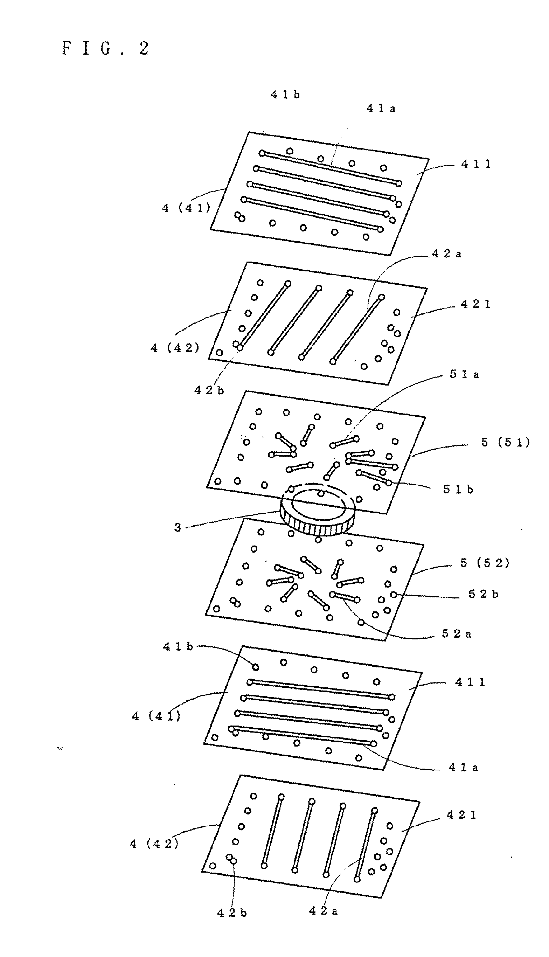

A geomagnetic sensor 2 functions as an orientation detecting means. Fig. 2 shows the exploded diagram of a specific example of the magnetic sensor 2, which is formed of a sensor substrate in which a magnetic field detection coil substrate 4 and an exciting coil substrate 5 are laminated on the upper and lower surfaces of a sensor core 3 so as to be opposed to each other.

The sensor core 3 is an amorphous core formed by cutting a ring shape from an amorphous thin plate and then etching the ring plate thus formed so that a toroidal coil can be wound on the ring plate.

The magnetic field detection coil substrate 4 includes a first detection coil substrate 41 having coil patterns 41a for formation of an x-axial component magnetic field detection coil and a second detection coil substrate 42 having coil patterns 42a for formation of a y-axial direction component magnetic field detection coil. The first direction coil substrate 41 includes two x-coil substrates 411 which are laminated on each other in a conducting manner so as to sandwich the sensor core 3 from the upper and lower sides thereof. Each x-coil substrate 411 is an epoxy substrate formed with one coil pattern 41a on its surface. Through-holes 41b for terminals that connect the respective x-coil patterns 41a are defined in peripheral edge portions of the epoxy substrates 411. Likewise, the second detection coil substrate 42 includes two y-coil substrates 421 which are laminated on each other in a conducting manner so as to sandwich the sensor core 3 from the upper and lower sides thereof. Each y-coil substrate 421 is an epoxy substrate formed with one coil pattern 42a on its surface. Through-holes 42b for terminals that connect the respective y-coil patterns 42a are defined in peripheral edge portions of the epoxy substrates 421.

Also, the exciting coil substrate 5 includes two exciting coil substrates 51 and 52 which are epoxy substrates laminated on each other in a conducting manner so as to sandwich the sensor core 3 from the upper and lower sides thereof. The epoxy substrates 51 and 52 are formed in such a manner that respective exciting coil patterns 51a and 52a are formed on their surfaces. Through-holes 51b and 52b for terminals that connect the respective exciting coil patterns 51a and 51b are defined in peripheral edge portions of the epoxy substrates 51 and 52.

The magnetic sensor 2 is formed by sequentially laminating the sensor core 3, the magnetic field detection coil substrate 4 and the exciting coil substrate 5 on the sensor core 3 in the stated order and then pressing those laminated members to form a laminate.

In the system of Fig. 1, a CPU 6 performs a given arithmetic operating process on the basis of a position signal inputted from the GPS receiving portion 1 and an orientation signal from the magnetic sensor 2 to determine the present position (the longitude, the latitude and the orientation). Then, the CPU 6 reads map information that corresponds to the present position from a map information storing portion 7 and displays the map information together with a present position indicator on a visual display 91 of a position information display portion 9. At the same time, the position information display portion 9 provides an audio output of the present position, comprising the orientation, etc., by means of a synthesised voice through a voice output portion (speaker) 92.

The positional information from the GPS receiving portion 1 is complemented by the orientation information from the magnetic sensor 2. Orientation information can be obtained through an arithmetic operation from the change in the positional information from the GPS receiving portion 1 with the movement of the portable terminal device. GPS position measurements at separate points in time can be used to calculate the speed between the two points and the direction the unit has travelled between the two points at which GPS has been used to determine the unit's position.

The orientation or direction information obtained from the arithmetic operation carried out on the GPS position data and the orientation information from the magnetic sensor 2 are compared with each other, and if the orientation information from the magnetic sensor 2 is set to be positive, a start point can be found out. As a result, the positional information of the GPS receiving portion 1 can be returned to the start point, and the integrated and accumulated error information can be returned to 0. The orientation information from the magnetic sensor is thereby used to determine the errors in the orientation or direction information determined from the GPS system. The magnetic sensor can therefore pick up and correct errors in the GPS system.

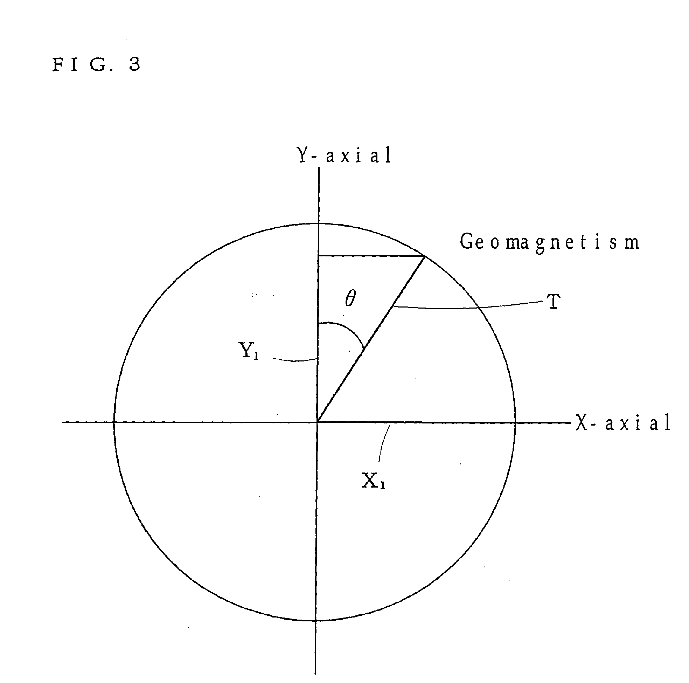

A map information display processing portion 8 subjects the map information to be displayed on the display 91 to rotary scrolling by an angle as required to ensure the forward direction (the direction of the magnetic sensor) indicated by the present position indicator is always toward the upper side of the display 91 on the map information displayed. The required angle is the orientation angle and is obtained in a manner which will now be described. The orientation signal from the magnetic sensor 2 is inputted to the CPU as two analog values obtained by resolving the detected geomagnetism into an x-axial direction (zonal direction) magnetic field vector value and a y-axial direction (meridional direction) magnetic field vector value. The CPU converts the analog input values into a digital signal. The magnetic field vector values in the x-axial direction and the y-axial direction are refined by using a given correction parameter stored in an EEP-ROM. From Fig. 3 it will be seen that the meridional direction is set to be $0°$, the clockwise rotating angle (orientation angle) $\theta°$ which defines the direction of the resultant vector T (representative of the direction of the magnetic sensor) of the x-axial magnetic field vector value $X_1$ and the y-axial magnetic field vector value $Y_1$ is obtained by the following expression.

$$\theta = tan^{-1} X_1/Y_1$$

The calculation of the orientation angle $\theta$ is enabled by a calculating logic not using the correction parameter for the magnetic field vector values in the respective directions.

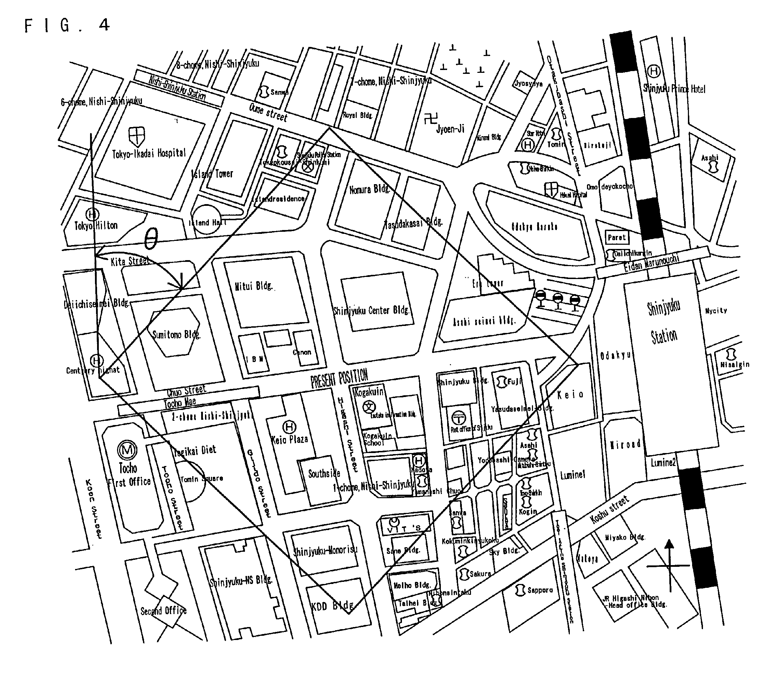

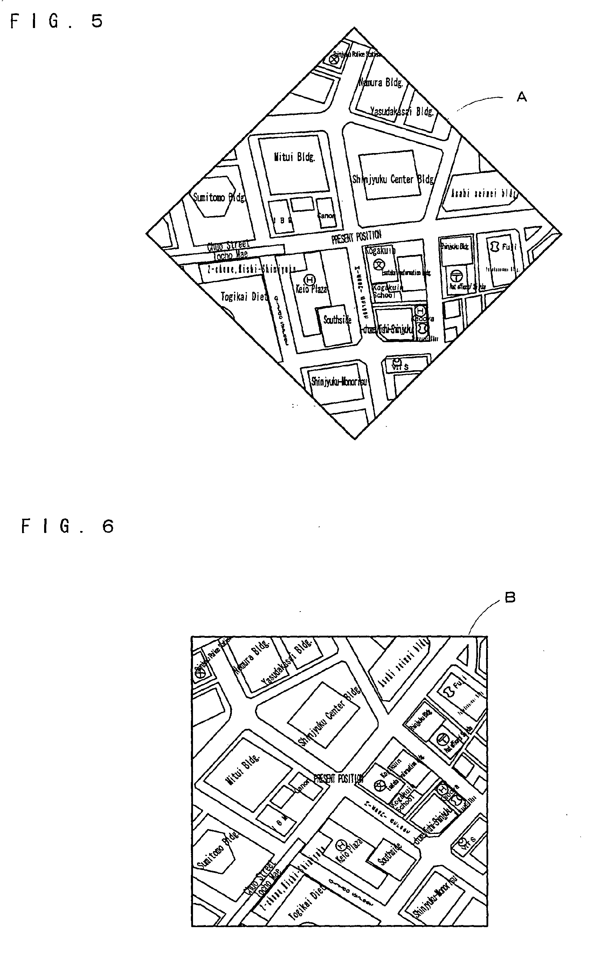

The processing steps of the map information display processing portion 8 will be described by way of example with reference to Figs. 4 to 6. It is assumed that a person using the portable terminal device now stands in a corner portion of Kogakuin University on Chuo-street leading to Shinjuku station and is facing North-East (so that the orientation angle $\theta$ is $45°$) as indicated in Fig. 4. Map information corresponding to the longitude and the latitude in question is read from the map information storing portion 7 in accordance with the position signal from the GPS receiving portion 2. Then, the map information in an area that matches the size of the visual display 91 (for example, 200 pixels x 200 pixels) with the present position P as its centre is sectioned and selected as indicated by a square outline in Fig. 4. The selected map information A (shown in Fig. 5) is the map information in an area corresponding to the display 91 lying at the orientation angle θ∘, obtained by the orientation signal from the magnetic sensor 2, clockwise from magnetic north (refer to Fig. 4). When the map information (Fig. 5) is displayed on the display 91, the map information A selected by the above display processing portion 8 is rotationally processed by the orientation angle θ counterclockwise and displayed thus corrected as map information B (refer to Fig. 6). As a result, the map information B is a map in which the direction (forward direction) of the magnetic sensor 2 is always toward the upper side of the display 91. Every time the orientation of the forward direction is changed by the movement of the portable terminal, the display processing portion 8 conducts the same processing as the above-described processing and displays the map information with the forward direction always toward the upper side of the display. Successive processings by the map information display processing portion 8 are conducted at high speed in real time.

Also, the map information display processing portion 8 maintains the characters and the marks contained in the map information displayed on the display 91 at the original positional relation with respect to the upper side direction of the display without conducting any rotating process when the map information is rotationally processed on the basis of the orientation angle.

Figure 6 shows an embodiment of the invention in which the street and building names of the map rotate with the map as the display (and portable telephone or unit) rotates but in which the position indicator words "PRESENT POSITION" move relative to the map detail so as to always remain parallel to the top of the display. In an alternative embodiment of the invention, the street names etc. could also rotate relative to the map so as to always remain parallel to the top of the display.

As discussed above, in Fig. 6, the map characters and so on are rotated by the orientation angle without conducting the above processing and displayed. The position characters and the marks mentioned in a horizontal direction maintain a manner in which they are mentioned horizontally (i.e. parallel to the top edge of display) even in the case where the map information is rotationally displayed, likewise. As a result, the information of the position characters, etc., is readily visible.

The destination may be inputted such as by using a keyboard of the portable terminal device. In this case, the shortest route to and the time required to reach the destination are calculated on the basis of the map information and then displayed on the visual display 91 of the position information display portion output through the voice output portion 92.

Also, if the positional information of the GPS receiving portion and the orientation information of the magnetic sensor which have been received or measured are temporarily stored, a locus along which the portable terminal device has moved can be confirmed on the basis of the stored information later.

As was described above, according to the present invention, the following advantages can be obtained.

Since a flux gate type magnetic sensor consisting of a sensor substrate in which a magnetic field detection coil substrate and an exciting coil substrate are laminated on the upper and lower surfaces of a sensor core, or a geomagnetic sensor using a hall element, a magnetic resistance element or the like is employed as the orientation detecting means used together with the GPS position detecting means, an accurate present position of a user can be displayed together with the map information on a display of a small portable terminal device, in particular, a portable telephone.

Also, since the map information is subjected to rotary scrolling by the map information processing means on the basis of the orientation angle obtained from the magnetic field vector value provided by the magnetic sensor, the map information can be displayed in such a manner that the forward moving direction of the portable terminal device is always a predetermined specified direction within a plane of the display portion, so that the orientation cf the map information coincides with the forward direction and the user is not disorientated and can understand the orientation and position during movement.

Further, since the positional information provided by the GPS is complemented by the orientation information provided by the geomagnetic sensor, the error accumulated by the integrating system can be permanently eliminated so as to provide a position display system of high precision.

**Claims**

1.  A positional information display system comprising:

    position detecting means (1) for detecting system position on the basis of a GPS signal and providing positional information representative of the detected position;
    magnetic sensor means (2) for detecting system orientation and outputting a representation thereof;
    map information storing means (7) for storing map information therein;
    positional information display means (9) for displaying the present position together with the map information; and
    display processing means (8) for subjecting at least some of the map and/or position information displayed by said positional information display means (9) to rotary scrolling through a calculated angle on the basis of said orientation representation with a change of orientation of the system;
    the rotary scrolling effected by said display processing means (8) being such that the present position of said system is so displayed by said display means (9) that the direction of forward movement of the system, or the orientation of at least some of the position and/or map information on the display means of the system is always a predetermined specific direction relative to the display means (9).

2. A positional information display system according to claim 1 comprising:

arithmetically operating means (6) for correcting with said orientation representation the positional information provided by said position detecting means (1) ; and wherein the positional information display means (9) displays the present position determined on the basis of corrected positional information provided by said arithmetically operating means (6).

3. A positional information display system according to claim 1 or 2, **characterised in that** the magnetic sensor means (2) comprises a flux gate type magnetic sensor consisting of a sensor substrate in which a magnetic field coil substrate and an exciting coil substrate are laminated on the upper and lower surfaces of a sensor core, or a geomagnetic sensor using a hall element, or a magnetic resistance element.

4. A positional information display system according to claim 3, the magnetic field detection coil substrate (4) of the flux gate type magnetic sensor includes a first detection coil substrate (41) having a coil pattern for formation of an x-axial component magnetic field detection coil and a second detection coil substrate (42) having a coil pattern for formation of a y-axial component magnetic field detection coil;

the exciting coil substrate (5) includes an annular coil pattern for formation of an exciting coil; and
through-holes (41b, 42b, 51b, 52b) which are associated with the respective coil patterns are defined in the edge portions of the sensor substrates (4, 5).

5. A positional information display system according to any preceding claim, **characterised in that**
said positional information display means (9) includes visual display means (9) for displaying an image or a character, and audio output means (92) for outputting a voice; and the system is thereby adapted to output the present position and/or the forward moving state visually and audibly.

6. A positional information display system according to any of claims 2 to 5, **characterised in that**

said magnetic means (2) analyses as sensed magnetic field into an x-axial magnetic field component and a y-axial magnetic field component and outputs those components as analog values representing orientation;
said arithmetically operating means (6) converts the analog values into a digital signal to represent the orientation of the system at the present position; and
said display processing means (8) rotates the map information through an angle corresponding to the orientation of the system at the present position where a magnetic north orientation corresponds to an angle of 0 degrees.

7. A positional information display system according to any preceding claim, **characterised in that**
said positional information display means (9) displays the shortest route to or a period of time required to reach a designation represented by destination information entered into the system.

Fig. 1

| | |
|---|---|
| Position detecting means (GPS receiving portion) | Orientation detecting means (Geomagnetic sensor) |

A map information storing portion → CPU

Present position information

A map information display processing portion

Voice output portion (Speaker)

Visual display portion (Visual display)

Position information display portion

F I G . 2

FIG. 3

FIG. 4

FIG. 5

FIG. 6